# EUROPEAN PATENT APPLICATION

(11) **EP 1 850 055 A2**
(43) Date of publication of application: **31.10.2007**
(21) Application number: 07008682.2
(22) Date of filing: 27.04.2007
(51) Int. Cl.: F16M 11/10

(54) **Display apparatus**

(30) Priority: 27.04.2006 JP 2006123018
(71) Applicant: Funai Electric Co., Ltd., Daito-shi Osaka 574-0013 (JP)
(72) Inventor: Iwai, Takeo, Daito-shi, Osaka 574-0013 (JP); Makino, Katsuhiko, Daito-shi, Osaka 574-0013 (JP)
(74) Representative: Beetz & Partner

(57) **Abstract**

A display apparatus (10) includes a display portion (11), a stand (12) for the display portion (11) to stand, a hinge portion (13) that supports the display portion (11) and the stand (12) in a tiltable manner, and a lock mechanism for locking the stand (12) in a usable state and in a folded state.

## Description

### BACKGROUND OF THE INVENTION

### Field of the Invention

The present invention relates to a display apparatus, in particular a display apparatus equipped with a display portion, a stand for the display portion to stand, and a hinge portion that supports the display portion and the stand in a tiltable manner.

### Description of Related Art

Recently, a thin display apparatus such as a liquid crystal TV set or a plasma TV set has become commonplace rapidly. This thin display apparatus can be hung on a wall for use, but in most cases it is set on a board by using a stand. Therefore, it can be said that a stand is essential to a thin display apparatus, and usually a thin display apparatus is sold with a stand that is attached to the apparatus.

As a screen becomes thinner, a ratio of a stand to a display apparatus increases. Furthermore, a stand is designed to be capable of adjusting a tilt angle of the screen. When such a display apparatus is packed for transportation, it may be necessary to separate the stand from the display apparatus for making a package size small so as to improve transportation efficiency.

However, the works of separating the stand from the display apparatus and combining them again take time and cause bad usability. To improve this, there are proposed methods of designing a stand to be capable of being folded and packing a thin display apparatus with a folded stand so that a size of a package is reduced and transportation efficiency is improved as described in JP-A-2005-140807 or JP-A-2000-56695, for example.

In the technique described in JP-A-2005-140807, a stand base is tilted frontward and upward by 90 degrees so that its package volume is reduced, but there is not a structure of fixing the stand base in that state. Therefore, when the display apparatus is put in or out from the package or on other occasions, the stand base may be tilted by chance, which can cause an accident.

In the technique described in JP-A-2000-56695, a stand body is provided with two components including a front support and a rear support, which are tilted for folding the stand. Therefore, the structure thereof is complicated, and cost thereof is high.

As described above, the conventionally proposed structures for folding a stand of a display apparatus have various problems.

### SUMMARY OF THE INVENTION

In view of the above described problems, it is an object of the present invention to provide a display apparatus with a stand that has a simple structure and can be folded easily so that a size of its package can be reduced and that transportation efficiency thereof can be improved.

To attain the above described object, a display apparatus in accordance with first aspect of the present invention includes: a display portion; a stand for the display portion to stand; a hinge portion that supports the display portion and the stand in a tiltable manner; and a lock mechanism for locking the stand in a usable state and in a folded state.

A display apparatus in accordance with second aspect of the present invention is characterized by a structure in which the hinge portion includes a stand clamping plate that is fixed to the stand and has a plurality of holes, and a display portion clamping plate that is fixed to the display portion and has a shaft with a lock shaft that moves in the direction of the rotation axis of the stand, and the lock mechanism includes the lock shaft that is inserted in or detached from the holes.

A display apparatus in accordance with third aspect of the present invention is characterized by a structure in which the lock shaft is detached from the hole when the shaft is pressed.

A display apparatus in accordance with fourth aspect of the present invention is characterized by a structure in which the lock shaft is detached from the hole when the shaft is pulled.

To attain the above described object, a display apparatus in accordance with fifth aspect of the present invention includes: a display portion, a stand for the display portion to stand, and a hinge portion that supports the display portion and the stand in a tiltable manner. Further, it is characterized by a structure in which the hinge portion includes a stand clamping plate that is fixed to the stand and has two holes, and a display portion clamping plate that is fixed to the display portion and has a shaft with a lock shaft that moves in the direction of the rotation axis of the stand, the lock shaft being inserted in or detached from the holes, a spring is disposed around the shaft and is contracted when the shaft is pressed, the stand and the hinge portion are covered with a cover partially, the cover being provided with a hole for the shaft to pass through, the end of the shaft being positioned inside the hole, and the lock shaft is detached from the hole when the shaft is pressed.

According to the present invention, since the lock mechanism is provided so that the stand can be locked in the folded state, a size of the package can be reduced for improving transportation efficiency while an accidental tilting of the stand can be prevented when the display apparatus is put in or out from the package. In addition, adopting the lock mechanism in which the lock shaft is inserted in or detached from the hole formed in the stand clamping plate, a simple structure of the lock mechanism can be realized.

### BRIEF DESCRIPTION OF THE DRAWINGS

Fig. 1 is a side phantom view of a display apparatus with a stand in a usable state.
Fig. 2 is a side phantom view of the display apparatus with the stand in a folded state.
Fig. 3 is a front phantom view of a hinge portion and the stand in the usable state.
Fig. 4 shows a state where a shaft is pressed in Fig. 3.
Fig. 5 is a front phantom view of the hinge portion and the stand in the usable state according to another embodiment.
Fig. 6 shows a state where a shaft is pressed in Fig. 5.

### DETAILED DESCRIPTION OF THE PREFERRED EMBODIMENTS

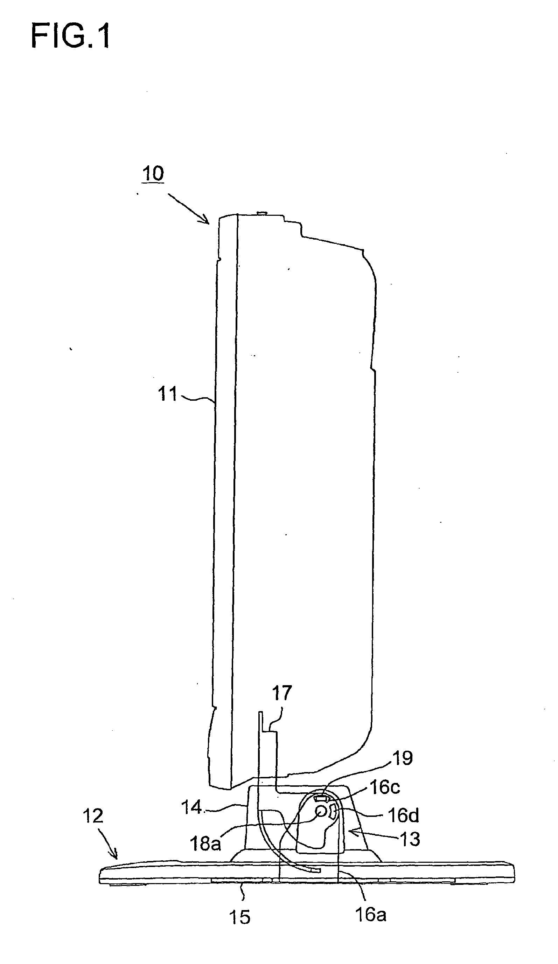

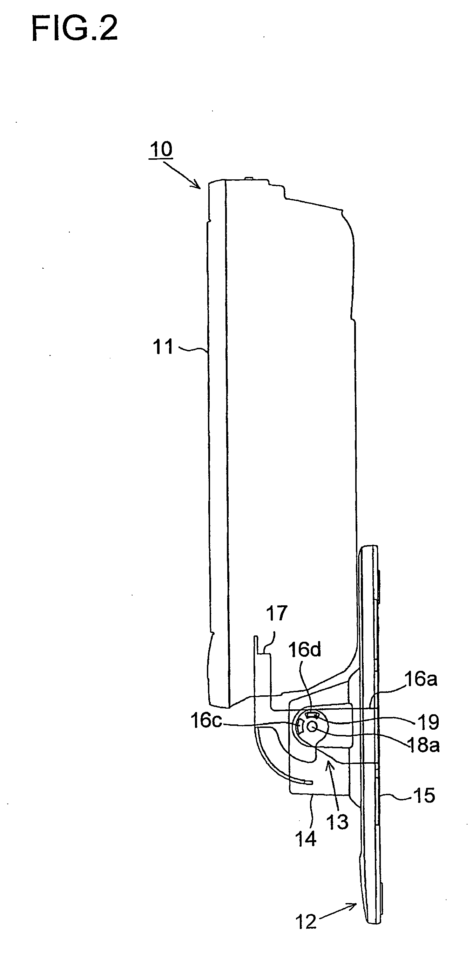

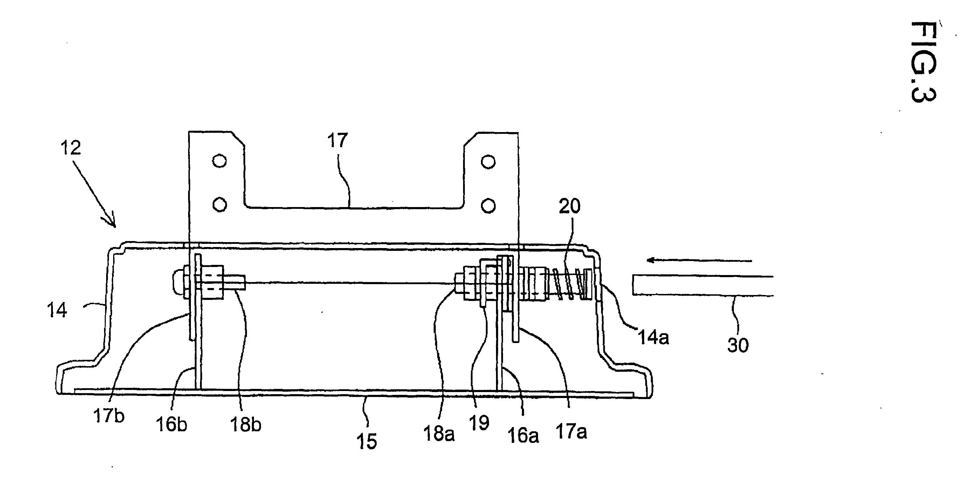

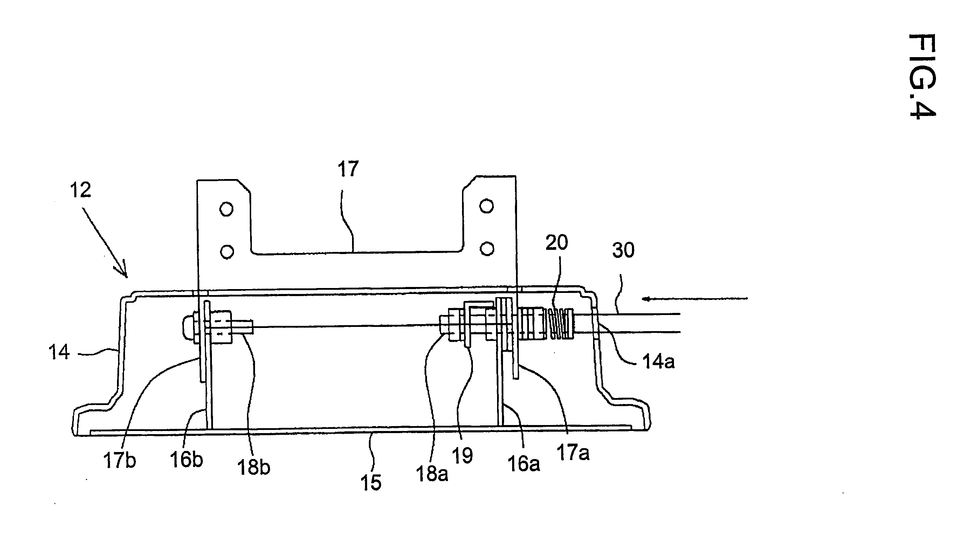

Fig. 1 is a side phantom view of a display apparatus with a stand in a usable state, Fig. 2 is a side phantom view of the display apparatus with the stand in a folded state, Fig. 3 is a front phantom view of a hinge portion and the stand in the usable state, and Fig. 4 shows a state where a shaft is pressed in Fig. 3.

A display apparatus 10 is generally made up of a display portion 11, a stand 12 for the display portion 11 to stand, and a hinge portion 13 that supports the display portion 11 and the stand 12 in a tiltable manner. The stand 12 and the hinge portion 13 are covered with a resin cover 14 partially.

The display portion 11 is preferably a thin type such as a liquid crystal display apparatus or the like. If a thickness of the display portion 11 is smaller than a depth of the stand 12, a depth of the display apparatus 10 when the stand is folded becomes small so that the effect of the present invention can be obtained.

The stand 12 is made up of a plate like base 15 that becomes a foundation of the display apparatus 10. The base 15 can be made of a metal plate.

The hinge portion 13 includes two stand clamping plates 16a and 16b that are fixed to the base 15 so as to rise vertically from the base 15, and a display portion clamping plate 17 that is fixed to back surface of the display portion 11. The stand clamping plates 16a and 16b and the display portion clamping plate 17 can be made of a metal plate. The stand clamping plates 16a and 16b may be formed by cut and raise of the base 15 or may be another member that is fixed to the base 15 with adhesion or screws. The display portion clamping plate 17 can be fastened to the display portion 11 with screws.

The display portion clamping plate 17 has two legs 17a and 17b, and these legs 17a and 17b are formed so as to overlap the outsides of the stand clamping plates 16a and 16b, respectively. The overlapping parts are provided with holes penetrating the display portion clamping plate 17 and the stand clamping plates 16a and 16b, through which metal shafts 18a and 18b pass, respectively. The display portion clamping plate 17 and the stand clamping plates 16a and 16b can tilt around the shafts 18a and 18b. As a result, the stand 12 can be switched between the usable state and the folded state with respect to the display portion 11.

The stand clamping plate 16a is provided with two holes 16c and 16d whose size is designed so that a lock shaft 19 that will be described later can be pass through. The two holes 16c and 16d are disposed at positions shifted from each other by 90 degrees around the rotation axis of the shaft 18a. When the stand 12 is in the usable state, the hole 16c is positioned above the shaft 18a while the hole 16d is positioned in the horizontal direction from the shaft 18b. When the stand 12 is in the usable state, the lock shaft 19 is inserted in the hole 16c so as to lock the stand 12. In contrast, when the stand 12 is in the folded state, the lock shaft 19 is inserted in the hole 16d so as to lock the stand 12. At this point, the holes 16c and 16d can be notches.

The shaft 18a is provided with a lock shaft 19 on the inside of the stand clamping plate 16a. The lock shaft 19 is a protruding shaft having a cross section of a L-shape, and the protruding shaft extends in parallel with the shaft 18a toward the outside of the stand clamping plate 16a so that the end thereof can be inserted in or detached from the hole 16c or 16d of the stand clamping plate 16a. This lock shaft 19 is preferably made of a metal, and it may be formed integrally to the shaft 18a or may be formed as a separate member that is fixed to the shaft 18a.

A spring 20 is disposed around the shaft 18a and is contracted when the shaft is pressed. The spring 20 is disposed on the outside of the leg 17a of the display portion clamping plate 17. In addition, a plurality of washers are also disposed around the shaft 18a at appropriate positions. On the other hand, the shaft 18b is fixed only with a fixing means such as a nut simply.

The cover 14 that covers the stand 12 and the hinge portion 13 is provided with a hole 14a for pressing the shaft 18a. The end face of the shaft 18a is flush with the hole 14a or back inward. Thus, the display portion 11 is prevented from inclining due to accidental press of the shaft 18a while it is used.

At this point, the stand 12 is required to have a sufficient height for holding. If it is designed to have a minimum height that is sufficient for folding, a volume of the entire display apparatus 10 becomes minimum when it is folded so that a thickness of a package thereof can be minimum.

An operation that is performed when the stand 12 of the display apparatus 10 is folded from the state in Fig. 1 to the state in Fig. 2 will be described. First, as shown in Fig. 1, as to the display apparatus 10 in the usable state, the lock shaft 19 is inserted in the hole 16c so that the stand 12 is locked. In this state, the shaft 18a is pressed by a rod 30 through the hole 14a externally as shown in Fig. 3. Then, the spring 20 is contracted, and the end of the lock shaft 19 that is inserted in the hole 16c is detached from the hole 16c (as the state shown in Fig. 4). Thus, the lock is released.

In the state where the shaft 18a is pressed by the rod 30, the stand 12 is tilted to the back surface side of the display portion 11 by 90 degrees to fold it. After that, when the rod 30 is released, the shaft 18a is pressed back by the restoring force of the spring 20 so that the end of the lock shaft 19 is inserted in the hole 16d (as the state shown in Fig. 2). Thus, the stand is locked in the folded state. On the contrary, in order to switch the stand from the folded state (the state shown in Fig. 2) to the usable state (the state shown in Fig. 1), the operation described above is performed reversely.

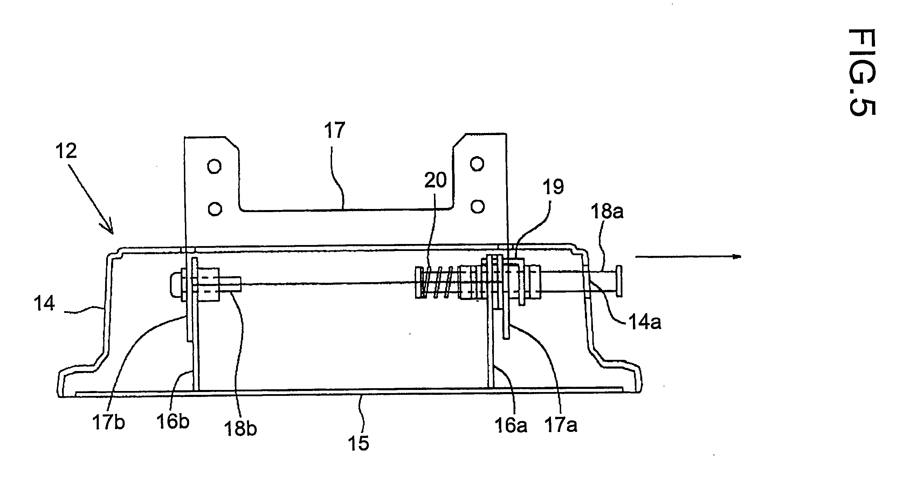

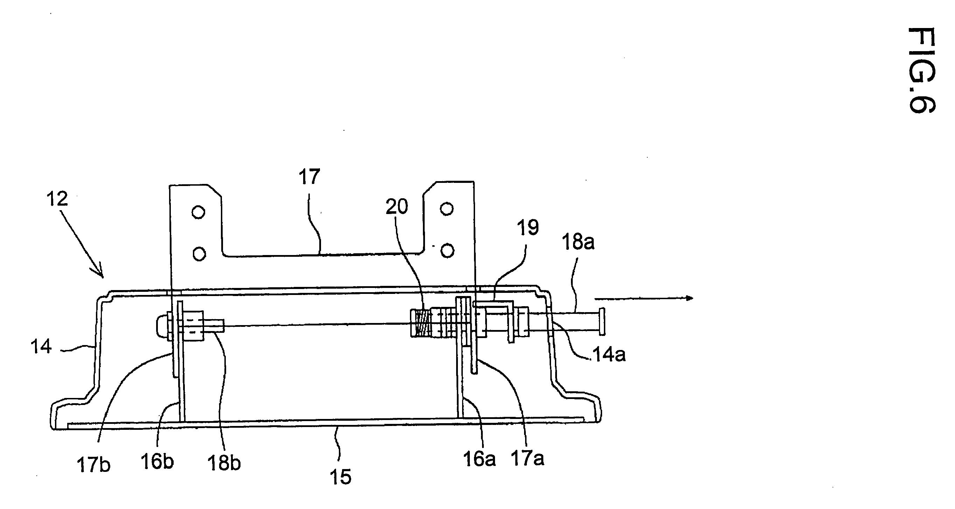

Next, another embodiment of the present invention will be described. Fig. 5 is a front phantom view of the hinge portion and the stand in the usable state according to another embodiment, and Fig. 6 shows a state where a shaft is pressed in Fig. 5. The same members as those in the embodiment described above will be denoted by the same reference numerals, and detailed descriptions thereof will be omitted. At this point, the general side view of the display apparatus is the same as that in Fig. 1 or 2, so it is omitted.

This embodiment is different from the embodiment described above in the structure including the shaft 18a, the lock shaft 19 and the spring 20, in which the lock is released by pulling the shaft 18a.

More specifically, the shaft 18a is provided with a lock shaft 19 disposed on the outside of the leg 17a of the display portion clamping plate 17. The lock shaft 19 is a protruding shaft having a cross section of a L-shape, and the protruding shaft extends in parallel with the shaft 18a toward the inside so that the end thereof can be inserted in or detached from the hole 16c or 16d of the stand clamping plate 16a. This lock shaft 19 is preferably made of a metal, and it may be formed integrally to the shaft 18a or may be formed as a separate member that is fixed to the shaft 18a.

A spring 20 is disposed around the shaft 18a and is contracted when the shaft is pulled. The spring 20 is disposed on the inside of the stand clamping plate 16a. In addition, a plurality of washers are also disposed around the shaft 18a at appropriate positions.

The cover 14 that covers the stand 12 and the hinge portion 13 is provided with a hole 14a for pulling the shaft 18a. The end of the shaft 18a protrudes from the hole 14a outward.

In order to fold the stand 12 of the display apparatus 10 from the state shown in Fig. 1 to the state shown in Fig. 2, the shaft 18a in the state shown in Fig. 5 is pulled outward first. Then, the spring 20 is contracted, and the end of the lock shaft 19 that is inserted in the hole 16c is detached from the hole 16c (as the state shown in Fig. 6). Thus, the lock is released.

In the state where the shaft 18a is pulled, the stand 12 is tilted to the back surface side of the display portion 11 by 90 degrees to fold it. After that, when the shaft 18a is released, the shaft 18a is pressed back by the restoring force of the spring 20 so that the end of the lock shaft 19 is inserted in the hole 16d (as the state shown in Fig. 2). Thus, the stand is locked in the folded state. On the contrary, in order to switch the stand from the folded state (the state shown in Fig. 2) to the usable state (the state shown in Fig. 1), the operation described above is performed reversely.

As described above, since the lock mechanism is provided so that the stand can be locked in the folded state, a size of the package can be reduced for improving transportation efficiency while an accidental tilting of the stand can be prevented when the display apparatus is put in or out from the package. In addition, adopting the lock mechanism in which the lock shaft 19 is inserted in or detached from the two holes 16c and 16d formed in the stand clamping plate 16a, a simple structure of the lock mechanism can be realized.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

The display apparatus of the present invention can be applied to a display apparatus such as a liquid crystal display apparatus including a thin display portion and a stand for supporting the display portion.

## Claims

1. A display apparatus comprising
a display portion;
a stand for the display portion to stand;
a hinge portion that supports the display portion and the stand in a tiltable manner; and
a lock mechanism for locking the stand in a usable state and in a folded state.

2. The display apparatus according to claim 1, **characterized in that**
the hinge portion includes a stand clamping plate that is fixed to the stand and has a plurality of holes, and a display portion clamping plate that is fixed to the display portion and has a shaft with a lock shaft that moves in the direction of the rotation axis of the stand, and
the lock mechanism includes the lock shaft that is inserted in or detached from the holes.

3. The display apparatus according to claim 2, **characterized in that** the lock shaft is detached from the hole when the shaft is pressed.

4. The display apparatus according to claim 2, **characterized in that** the lock shaft is detached from the hole when the shaft is pulled.

5. A display apparatus comprising a display portion, a stand for the display portion to stand, and a hinge portion that supports the display portion and the stand in a tiltable manner, **characterized in that**
the hinge portion includes a stand clamping plate that is fixed to the stand and has two holes, and a display portion clamping plate that is fixed to the display portion and has a shaft with a lock shaft that moves in the direction of the rotation axis of the stand, the lock shaft being inserted in or detached from the holes,
a spring is disposed around the shaft and is contracted when the shaft is pressed,
the stand and the hinge portion are covered with a cover partially, the cover being provided with a hole for the shaft to pass through, the end of the shaft being positioned inside the hole, and
the lock shaft is detached from the hole when the shaft is pressed.
